# EUROPEAN PATENT APPLICATION

(11) **EP 4 851 201 A1**
(43) Date of publication of application: **09.12.2026**
(21) Application number: 25748096.2
(22) Date of filing: 24.01.2025
(51) Int. Cl.: C08F 4/02, C08F 2/44, C08F 4/04, C09J 11/02, C09J 201/00

(54) **THERMAL LATENT POLYMERIZATION INITIATOR, RESIN COMPOSITION CONTAINING SAME, ADHESIVE, SEALING MATERIAL, FILM, CURED PRODUCT OF SAME, METHOD FOR PRODUCING CURED PRODUCT, AND SEMICONDUCTOR DEVICE OR ELECTRONIC COMPONENT**

(30) Priority: 29.01.2024 JP 2024010832
(71) Applicant: Namics Corporation, Niigata-shi, Niigata 950-3131 (JP)
(72) Inventor: SHIMOMURA Osamu, Osaka-shi, Osaka 535-8585 (JP); IWAYA Kazuki, Niigata-shi, Niigata 950-3131 (JP); NAGATA Rieko, Niigata-shi, Niigata 950-3131 (JP)
(74) Representative: Hoffmann Eitle
(86) International application number: PCT/JP2025/002136
(87) International publication number: WO 2025/164514

(57) **Abstract**

An object is to provide a novel latent polymerization initiator that is excellent in storage stability and enables thermal curing of a resin composition at a low temperature, and to provide a resin composition and an adhesive or a sealing material that are excellent in storage stability and capable of thermal curing at a low temperature.

Provided are a thermally latent polymerization initiator in which a thermal radical initiator is supported on inorganic ion exchanger particles, a resin composition comprising (A) a radically polymerizable compound and (B) the thermally latent polymerization initiator, and an adhesive or a sealing material comprising the same.

## Description

### Field of the Invention

The present invention relates to a thermally latent polymerization initiator and a method for producing the same, a resin composition comprising the thermally latent polymerization initiator, an adhesive or sealing material comprising the same, a film, a cured product thereof, a method for producing a cured product, and a semiconductor device or electronic component comprising the cured product.

### Background Art

Radical polymerization is the most common polymerization method that enables polymerization of a variety of vinyl compounds using a highly active, neutral radical species as a growing species, and is also widely used industrially. For example, a resin composition containing a radically polymerizable resin such as an acrylate and a radical polymerization initiator has been developed, and is widely utilized as an adhesive, a sealing material, a coating agent, a paint, a molding material, and the like.

Radical polymerization by heat is usually initiated using a radical generator such as an azo compound or an organic peroxide as a polymerization initiator. An azo compound has an azo group (-N=N-) and is decomposed into two carbon radicals and a nitrogen molecule by heat or light. An organic peroxide (peroxide) has an -O-O-bond, which is decomposed into oxygen radicals by heat. Since such a radical generator has high reactivity toward light and/or heat and there is a risk of explosion depending on handling, it needs to be stored in a cold and dark place.

In addition, when a radical generator is included in a resin composition as a polymerization initiator, there are problems such as that due to high reactivity, it is gradually deactivated during storage of the resin composition and the polymerization reaction does not proceed at the time of use, or an unintended polymerization reaction proceeds during storage and the viscosity of the resin composition increases. In order to improve the storage stability of an organic peroxide in a resin composition, it is known to use a microencapsulated organic peroxide as a latent catalyst (see, for example, Patent Documents 1 and 2).

### PRIOR ART REFERENCE

### Patent Document

Patent Document 1: Japanese Patent Application Laid-Open No. S57-12039
Patent Document 2: Japanese Patent Application Laid-Open No. H07-118610

### Summary of the Invention

On the other hand, a resin composition containing a radical initiator having high storage stability sometimes required a curing reaction at a high temperature.

An object of the present invention is to provide a novel latent polymerization initiator that is excellent in storage stability and enables thermal curing of a resin composition at a low temperature, and to provide a resin composition and an adhesive or a sealing material that are excellent in storage stability and capable of thermal curing at a low temperature.

Specific means for solving the above-mentioned problems are as follows.

Aspects of the present invention include the following thermally latent polymerization initiator and a method for producing the same, a resin composition comprising the thermally latent polymerization initiator, an adhesive or sealing material comprising the same, a film, a cured product thereof, a method for producing a cured product, and a semiconductor device or electronic component comprising the cured product.
(1) A thermally latent polymerization initiator, wherein a thermal radical initiator is supported on inorganic ion exchanger particles.
(2) The thermally latent polymerization initiator according to (1) above, wherein the thermal radical initiator is an azo-based radical initiator.
(3) The thermally latent polymerization initiator according to (1) or (2) above, wherein the inorganic ion exchanger is an inorganic cation exchanger.
(4) The thermally latent polymerization initiator according to (3) above, wherein the inorganic cation exchanger is a phosphoric acid-based inorganic cation exchanger.
(5) The thermally latent polymerization initiator according to (4) above, wherein the phosphoric acid-based inorganic cation exchanger is zirconium phosphate.
(6) A resin composition comprising (A) a radically polymerizable compound, and (B) the thermally latent polymerization initiator according to any one of (1) to (5) above.
(7) The resin composition according to (6) above, further comprising (C) a thermal radical initiator desorption accelerator.
(8) The resin composition according to (7) above, wherein the (C) thermal radical initiator desorption accelerator is a Lewis basic substance.
(9) An adhesive or sealing material comprising the resin composition according to any one of (6) to (8) above.
(10) A film comprising the resin composition according to any one of (6) to (8) above.
(11) A cured product in which the resin composition according to any one of (6) to (8) above has been cured.
(12) A method for producing a cured product, comprising heating the resin composition according to any one of (6) to (8) above.
(13) A semiconductor device or electronic component comprising the cured product according to (11) above.
(14) A method for producing a thermally latent polymerization initiator, comprising mixing a thermal radical initiator and an inorganic ion exchanger in the presence of a medium at a temperature lower than a 10-hour half-life temperature of the thermal radical initiator.
(15) The method for producing a thermally latent polymerization initiator according to (14) above, wherein the thermal radical initiator is an azo-based radical initiator.

According to one aspect of the present invention, a novel thermally latent polymerization initiator that is excellent in storage stability and enables thermal curing of a resin composition at a low temperature, and a method for producing the same are provided. Further, according to another aspect of the present invention, a resin composition that is excellent in storage stability and capable of thermal curing at a low temperature, an adhesive or sealing material comprising the same, a film, a cured product thereof, a method for producing a cured product, and a semiconductor device or electronic component comprising the cured product are provided.

### Mode for carrying out the Invention

In the present specification, following the convention in the field of synthetic resins, a name including the term "resin", which usually refers to a polymer (particularly a synthetic polymer), may be used for a component constituting a resin composition before curing, even though the component is not a polymer, for example, even when it is a prepolymer compound before curing.

### [Thermally Latent Polymerization Initiator]

The thermally latent polymerization initiator, which is one aspect of the present invention, is a thermally latent polymerization initiator in which a thermal radical initiator is supported on inorganic ion exchanger particles. According to this aspect, it is possible to provide a novel thermally latent polymerization initiator that is excellent in storage stability and enables thermal curing of a resin composition at a low temperature.

In stabilizing the thermal radical initiator, the present inventors focused on an inorganic ion exchanger. The inorganic ion exchanger refers to a substance whose skeleton is composed of inorganic atoms other than carbon atoms (for example, zirconium, antimony, bismuth, magnesium, titanium, hafnium, germanium, tin, lead, aluminum, etc.) and which has an ion-exchange capacity. The inorganic ion exchanger has an ion-exchange site whose charge is negatively or positively charged, and can exchange a trapped ion with another ion. The present inventors have found that (1) the thermal radical initiator is supported on this inorganic ion exchanger, and (2) a substance in which the thermal radical initiator is supported on the inorganic ion exchanger has improved storage stability and enables thermal curing of a resin composition at a low temperature without reducing the activity of the thermal radical initiator itself. As its mechanism, although not limited thereto, it is considered that latency is imparted by the ionized thermal radical initiator being supported and stabilized at the ion-exchange site of the inorganic ion exchanger, and the thermal radical initiator is eliminated from the inorganic ion exchanger and activated under thermal curing conditions of the resin composition.

### - Thermal radical initiator

The thermally latent polymerization initiator of the present aspect is a substance in which a thermal radical initiator is supported on inorganic ion exchanger particles. The thermal radical initiator is a substance that generates a radical as an active species by heat to proceed polymerization of a radically polymerizable compound, and examples thereof include, but are not limited to, an azo-based radical initiator having an azo group (-N=N-) that generates a carbon radical, and an organic peroxide-based initiator having an -O-O- bond that generates an oxygen radical. In the present aspect, from the viewpoint of the ease of being supported on the inorganic ion exchanger and its stability, the thermal radical initiator is preferably an azo-based radical initiator.

In the present aspect, the azo-based radical initiator is preferably an azo compound having a basic group, or an azo compound having an acidic group. Depending on whether the azo compound has a basic group or an acidic group, the type of the host inorganic ion exchanger is selected.

In the present specification, an azo compound having a basic group means a compound having an azo group in its molecular structure and having a group capable of accepting a proton (H⁺). The azo compound having a basic group is cationized by accepting a proton (H⁺), and is supported on an inorganic cation exchanger described later at its ion-exchange site. Examples of the azo compound having a basic group include compounds having a heteroatom other than the azo group in their molecular structures. The heteroatom other than the azo group can be contained in the compound in the form of a functional group containing a heteroatom, and examples of such a functional group containing a heteroatom include, but are not limited to, a hydroxyl group, a carboxy group, an ether group, an ester group, a phosphate ester group, an amino group, an imino group, a nitrile group, a thiol group, a sulfide group, a sulfoxide group, a disulfide group, a thioester group, an amide group, and the like. Specific examples of the azo compound having a basic group include, but are not limited to, 2,2'-azobis(N-cyclohexyl-2-methylpropionamide), 2,2'-azobis[N-(2-methylpropyl)-2-methylpropionamide], 2,2'-azobis(N-butyl-2-methylpropionamide) (for example, product name: VAm-110, FUJIFILM Wako Pure Chemical Corporation), 2,2'-azobis[N-(2-methylethyl)-2-methylpropionamide], 2,2'-azobis(N-hexyl-2-methylpropionamide), 2,2'-azobis(N-propyl-2-methylpropionamide), 2,2'-azobis(N-ethyl-2-methylpropionamide), 2,2'-azobis{2-methyl-N-[1,1-dist(hydroxymethyl)-2-hydroxyethyl]propionamide}, 2,2'-azobis{2-methyl-N-[2-(1-hydroxybutyl)]propionamide}, 2,2'-azobis[2-methyl-N-(2-hydroxyethyl)propionamide] (for example, product name: VA-086, FUJIFILM Wako Pure Chemical Corporation), 2,2'-azobis[N-(2-propenyl)-2-methylpropionamide], 2,2'-azobis[2-(2-imidazolin-2-yl)propane] disulfate dihydrate, 2,2'-azobis[2-(2-imidazolin-2-yl)propane] (for example, product name: VA-061, FUJIFILM Wako Pure Chemical Corporation), 2,2'-azobis[N-(2-carboxyacyl)-2-methyl-propionamidine], 2,2'-azobis{2-[N-(2-carboxyethyl)amidine]propane}, azodicarbonamide, azodicarbon-(N-methyl)amide, 1,1'-azobis(cyclohexane-1-carbonitrile) (for example, product name: V-40, FUJIFILM Wako Pure Chemical Corporation), 2,2'-azobis[2-(2-imidazolin-2-yl)propane] dihydrochloride (for example, product name: VA-044, FUJIFILM Wako Pure Chemical Corporation), 2,2'-azobis(2-methylpropionamidine) dihydrochloride (for example, product name: V-50, FUJIFILM Wako Pure Chemical Corporation), dimethyl 2,2'-azobis(2-methylpropionate) (for example, product name: V-601, FUJIFILM Wako Pure Chemical Corporation), and the like. These azo compounds having a basic group may be used alone, or two or more kinds thereof may be used in combination.

In the present specification, an azo compound having an acidic group means a compound having an azo group in its molecular structure and having a group capable of donating a proton (H⁺). The azo compound having an acidic group is anionized by donating a proton (H⁺), and is supported on an inorganic anion exchanger described later at its ion-exchange site. Examples of the azo compound having an acidic group include compounds having a heteroatom other than the azo group in their molecular structures. The heteroatom other than the azo group can be contained in the compound in the form of a functional group containing a heteroatom, and examples of such a functional group containing a heteroatom include, but are not limited to, a hydroxyl group, a carboxyl group, a thiol group, a sulfo group, a phosphate group, and the like. Specific examples of the azo compound having an acidic group include, but are not limited to, 4,4'-azobis(4-cyanovaleric acid) (for example, product name: V-501, FUJIFILM Wako Pure Chemical Corporation), 2,2'-azobis[N-(2-carboxyethyl)-2-methylpropionamidine] tetrahydrate (for example, product name: VA-057, FUJIFILM Wako Pure Chemical Corporation), and the like. These azo compounds having an acidic group may be used alone, or two or more kinds thereof may be used in combination.

The 10-hour half-life temperature (T10) of the thermal radical initiator is preferably 35 to 120°C, more preferably 40 to 115°C, and further preferably 45 to 110°C.

### - Inorganic ion exchanger particles

The thermally latent polymerization initiator of the present aspect is a substance in which a thermal radical initiator is supported on inorganic ion exchanger particles. The inorganic ion exchanger particles refer to a particulate inorganic ion exchanger. The inorganic ion exchanger refers to a substance whose skeleton is composed of inorganic atoms other than carbon atoms (for example, zirconium, antimony, bismuth, magnesium, titanium, hafnium, germanium, tin, lead, aluminum, etc.) and which has an ion-exchange capacity. The inorganic ion exchanger has an ion-exchange site whose charge is negatively or positively charged, and can exchange a trapped ion with another ion. Examples of the inorganic ion exchanger include, but are not limited to, clay minerals such as montmorillonite, vermiculite, beidellite, kaolinite, dickite, nacrite, halloysite, smectite, allophane, hectorite, sepiolite, bentonite, pyrophyllite, muscovite, margarite, antigorite, chrysotile, talc, phlogopite, and xanthophyllite, which are silicates; hydrous sodium silicates such as kanemite, makatite, ehrleite, magadiite, and kenyaite; calcium silicates such as tobermoryite; phosphates of tetravalent metals such as zirconium phosphate and titanium phosphate; other titanates such as potassium titanate, barium titanate, strontium titanate, calcium titanate, magnesium titanate, cobalt titanate, nickel titanate, lead titanate, and zinc titanate; and others such as uranates, vanadates, niobates, tungstates, molybdates, aluminates, basic copper acetate, hydrotalcite, hydrous bismuth oxide, hydrous magnesium oxide, and hydrous aluminum oxide. These inorganic ion exchanger particles may be used alone, or two or more kinds thereof may be used in combination.

In the present specification, an inorganic ion exchanger having a negatively charged ion-exchange site and having a cation-exchange capacity is referred to as an inorganic cation exchanger. In the present specification, an inorganic ion exchanger having a positively charged ion-exchange site and having an anion-exchange capacity is referred to as an inorganic anion exchanger. In the present aspect, the inorganic cation exchanger can support an azo compound having a basic group as a thermal radical initiator at its ion-exchange site. In the present aspect, the inorganic anion exchanger can support an azo compound having an acidic group as a thermal radical initiator at its ion-exchange site.

In one embodiment of the present aspect, the inorganic ion exchanger is an inorganic cation exchanger. In one embodiment, the inorganic cation exchanger is preferably a phosphoric acid-based inorganic cation body which is a phosphate of a tetravalent metal such as zirconium phosphate or titanium phosphate, a clay mineral such as smectite, a hydrous sodium silicate such as kanemite or magadiite, a niobate, or a titanate, and more preferably a phosphoric acid-based inorganic cation body such as zirconium phosphate or titanium phosphate. In one embodiment, the phosphoric acid-based inorganic cation body is zirconium phosphate.

In one embodiment of the present aspect, the inorganic ion exchanger is an inorganic anion exchanger. In one embodiment, the inorganic anion exchanger is preferably hydrotalcite.

Regarding zirconium phosphate, depending on its production method, zirconium phosphates having various compositions (for example, a P/Zr molar ratio of 2.0 or more, 2.0, 1.5, 1.0, or 1.0 or less) and structures (for example, an amorphous structure, a two-dimensional layered structure, and a three-dimensional network structure) exist (Katsuhiko, ITOHO, Yashushi NAKAJIMA, Journal of Ion Exchange, Vol. 4, No. 3 (1994)). In the present aspect, zirconium phosphate having an amorphous or two-dimensional layered structure can be used.

In the present aspect, the average particle size of the inorganic ion exchanger particles can be 1 nm to 100 µm.

In one embodiment, the average particle size of the inorganic ion exchanger particles is, for example, 0.1 to 100 µm, for example, 0.5 to 50 µm, and for example, 1 to 10 µm.

In one embodiment, the average particle diameter of the primary particles of the inorganic ion exchanger particles is, for example, 1 nm to 500 nm, for example, 5 nm to 450 nm, and for example, 10 nm to 400 nm. A resin composition comprising a thermally latent polymerization initiator obtained by using such inorganic ion exchanger particles having a very small average particle diameter can penetrate into a narrow gap, and can be utilized for bonding or sealing of a narrow gap.

In the present aspect, inorganic ion exchanger particles having different average particle sizes may be used in combination.

In the present specification, the average particle size is a particle size at a cumulative value of 50% in a particle size distribution on a volume basis, measured by a laser diffraction/scattering method. Alternatively, the average particle size can also be determined as an average value when measuring particle diameters of plate surfaces (long axis lengths of plate surfaces) of 20 arbitrary particles with a transmission electron microscope (TEM), or as an average value when measuring particle diameters of plate surfaces (long axis lengths of plate surfaces) of 20 arbitrary particles with a scanning electron microscope (SEM) (magnification: 5000 times). In the present specification, a method for measuring the average particle diameter prioritizes the scanning electron microscope (SEM) (magnification: 5000 times) over the transmission electron microscope (TEM). When most of the particles are clearly 0.10 µm or less and the average particle diameter cannot be measured with the scanning electron microscope (SEM) (magnification: 5000 times), a value measured by the transmission electron microscope (TEM) is adopted as the average particle diameter.

The shape of the inorganic ion exchanger particles is not particularly limited, and may be any of a spherical shape, a flaky shape, a needle-like shape, an amorphous shape, and the like.

The method for producing the thermally latent polymerization initiator of the present aspect is not particularly limited, but can be, for example, a method comprising mixing the thermal radical initiator and the inorganic ion exchanger in the presence of a medium at a temperature lower than the 10-hour half-life temperature of the thermal radical initiator. By mixing at a temperature lower than the 10-hour half-life temperature of the thermal radical initiator, unintended decomposition of the thermal radical initiator can be suppressed. The method for producing a thermally latent polymerization initiator is one aspect of the present invention.

The medium may be any liquid medium that can dissolve the thermal radical initiator and/or is miscible with the thermal radical initiator, and examples thereof include water; alcohols such as methanol, ethanol, propanol, and butanol; esters such as ethyl acetate and methyl acetate; ketones such as acetone and 2-butanone; ethers such as diethyl ether, dimethyl ether, diisopropyl ether, and tetrahydrofuran; amides such as dimethylformamide and dimethylacetamide; alkanes such as hexane and heptane; aromatic hydrocarbons such as benzene and toluene; dimethyl sulfoxide, N-methylpyrrolidone, acetonitrile, chloroform, dichloromethane, and the like; and mixtures of these liquid mediums. Among these, water, alcohols, or esters are preferred.

The temperature of the mixing is a temperature lower than the 10-hour half-life temperature of the thermal radical initiator, preferably a temperature lower than the 10-hour half-life temperature of the thermal radical initiator by 10°C or more, and more preferably a temperature lower than the 10-hour half-life temperature of the thermal radical initiator by 20°C or more.

The mixing can be performed, for example, by stirring for 30 minutes to 48 hours.

After completion of the reaction, by separating from the liquid medium and washing with an appropriate washing medium, a thermally latent polymerization initiator in which the thermal radical initiator is supported on the inorganic ion exchanger particles can be obtained. The washing medium may be the same as the liquid medium used in the mixing, or a different liquid medium may be used. In a state after washing, since the thermally latent polymerization initiator is a gel-like substance containing the liquid medium, the liquid medium in the thermally latent polymerization initiator can be removed by drying as necessary. The thermally latent polymerization initiator can be used in either a state containing the liquid medium or a state from which the liquid medium has been removed.

In the thermally latent polymerization initiator of the present aspect, it is considered that the thermal radical initiator can be supported depending on a space volume or a surface area of the ion-exchange site of the inorganic ion exchanger, and for example, the thermal radical initiator can be supported in an amount of 1 to 50% by mass, preferably 10 to 50% by mass, based on the total mass of the thermally latent polymerization initiator. When the thermal radical initiator is an azo-based radical initiator, the amount (% by mass) of the thermal radical initiator in the thermally latent polymerization initiator can be calculated by determining the mass of nitrogen atoms contained in the thermally latent polymerization initiator with an elemental analyzer. Specifically, the content (% by mass) of the thermal radical initiator in the thermally latent polymerization initiator can be estimated by the following formula: 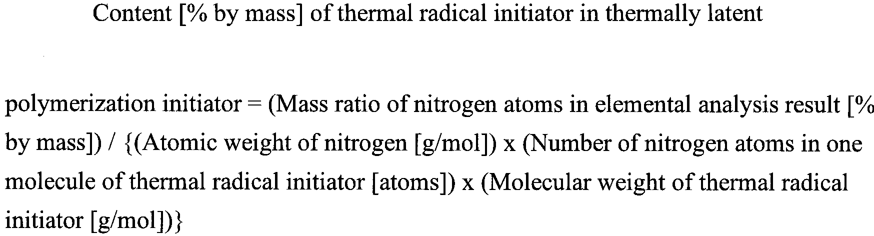 Content [% by mass] of thermal radical initiator in thermally latent polymerization initiator = (Mass ratio of nitrogen atoms in elemental analysis result [% by mass]) / {(Atomic weight of nitrogen [g/mol]) x (Number of nitrogen atoms in one molecule of thermal radical initiator [atoms]) x (Molecular weight of thermal radical initiator [g/mol])}

### [Resin composition]

A resin composition according to one aspect of the present invention comprises (A) a radically polymerizable compound, and (B) the thermally latent polymerization initiator of the above-described aspect. According to the present aspect, a resin composition that is excellent in storage stability and can be thermoset at a low temperature can be provided.

### - (A) Radically polymerizable compound

The resin composition of the present aspect comprises (A) a radically polymerizable compound (hereinafter, also referred to as "component (A)"). Examples of the radically polymerizable compound include, but are not limited to, compounds having an unsaturated double bond such as (meth)acrylate compounds, cyanoacrylate compounds, maleimide compounds, and methylene malonates (2-methylene-1,3-dicarbonyl compounds and derivatives thereof), or a mixture of a compound having an unsaturated double bond and a thiol compound (an ene-thiol reactable mixture).

In the present specification, the (meth)acrylate compound is a compound having at least one (meth)acryloyl group in its molecule, and examples thereof include a monofunctional (meth)acrylate compound having one (meth)acryloyl group and a polyfunctional (meth)acrylate compound having two or more (meth)acryloyl groups. In the present specification, the "(meth)acryloyl group" includes both a methacryloyl group and an acryloyl group. In addition, the "(meth)acrylate compound" includes both an acrylate compound and a methacrylate compound.

Examples of the monofunctional (meth)acrylate compound include, but are not limited to:
- esters of a monohydric alcohol and (meth)acrylic acid, such as ethyl (meth)acrylate, trifluoroethyl (meth)acrylate, diethylaminoethyl (meth)acrylate, dimethylaminoethyl (meth)acrylate, glycidyl (meth)acrylate, n-butyl (meth)acrylate, isobutyl (meth)acrylate, tert-butyl (meth)acrylate, isoamyl (meth)acrylate, cyclohexyl (meth)acrylate, 2-ethylhexlester (meth)acrylate, isodecyl (meth)acrylate, isobornyl (meth)acrylate, stearyl (meth)acrylate, lauryl (meth)acrylate, phenoxyethyl (meth)acrylate, benzyl (meth)acrylate, tetrahydrofurfuryl (meth)acrylate, ethoxydiethylene glycol (meth)acrylate, phenoxydiethylene glycol (meth)acrylate, phenoxypolyethylene glycol (meth)acrylate, butoxydiethylene glycol (meth)acrylate, methoxydiprolylene glycol (meth)acrylate, methoxypolyethylene glycol (meth)acrylate, methoxytriethylene glycol (meth)acrylate, methoxypolyethylene glycol (meth)acrylate, 2-ethylhexyldiethylene glycol (meth)acrylate, 4-tert-butylcyclohexyl (meth)acrylate, and 3-phenoxybenzyl (meth)acrylate; and
- mono(meth)acrylates of a polyhydric alcohol or esters of a monohydric alcohol and (meth)acrylic acid, such as 2-hydroxyethyl (meth)acrylate, 2-hydroxypropyl (meth)acrylate, 2-hydroxybutyl (meth)acrylate, 2-hydroxy-3-phenoxypropyl (meth)acrylate, octyl acrylate, nonyl acrylate, isononyl acrylate, 3,3,5-trimethylcyclohexyl acrylate, cyclic trimethylolpropane formal acrylate, 1-naphthalenemethyl (meth)acrylate, 1-ethylcyclohexyl (meth)acrylate, 1-methylcyclohexyl (meth)acrylate, 1-ethylcyclopentyl (meth)acrylate, 1-methylcyclopentyl (meth)acrylate, dicyclopentenyl (meth)acrylate, dicyclopentenyloxyethyl (meth)acrylate, dicyclopentanyl (meth)acrylate, nonylphenoxypolyethylene glycol (meth)acrylate, tetrahydrodicyclopentadienyl (meth)acrylate, 2-(o-phenylphenoxy)ethyl (meth)acrylate, isobornylcyclohexyl (meth)acrylate, (2-methyl-2-ethyl-1,3-dioxolan-4-yl)methyl (meth)acrylate, 1-adamantyl (meth)acrylate, 3-hydroxy-1-adamantyl (meth)acrylate, 2-methyl-2-adamantanyl (meth)acrylate, 2-ethyl-2-adamantanyl (meth)acrylate, 2-isopropyladamantan-2-yl (meth)acrylate, 3-hydroxy-1-adamantyl (meth)acrylate, (adamantan-1-yloxy)methyl (meth)acrylate, 2-isopropyl-2-adamantyl (meth)acrylate, 1-methyl-1-ethyl-1-adamantylmethanol (meth)acrylate, 1,1-diethyl-1-adamantylmethanol (meth)acrylate, 2-cyclohexylpropan-2-yl (meth)acrylate, 1-isopropylcyclohexyl (meth)acrylate, 1-methylcyclohexyl (meth)acrylate, 1-ethylcyclopentyl (meth)acrylate, 1-methylcyclohexyl (meth)acrylate, tetrahydropyranyl (meth)acrylate, tetrahydro-2-furanyl (meth)acrylate, 2-oxotetrahydrofuran-3-yl (meth)acrylate, (5-oxotetrahydrofuran-2-yl)methyl (meth)acrylate, (2-oxo-1,3-dioxolan-4-yl)methyl (meth)acrylate, N-acryloyloxyethyl hexahydrophthalimide, α-acryloyl-ω-methoxypoly(oxyethylene), and 1-ethoxyethyl (meth)acrylate. These may be used alone, or two or more kinds thereof may be used in combination.
Examples of the polyfunctional (meth)acrylate compound include, but are not limited to, diacrylate and/or dimethacrylate of tris(2-hydroxyethyl) isocyanurate; triacrylate and/or trimethacrylate of tris(2-hydroxyethyl) isocyanurate; trimethylolpropane triacrylate and/or trimethacrylate, or an oligomer thereof; pentaerythritol triacrylate and/or trimethacrylate, or an oligomer thereof; polyacrylate and/or polymethacrylate of dipentaerythritol; tris(acryloxyethyl) isocyanurate; caprolactone-modified tris(acryloxyethyl) isocyanurate; caprolactone-modified tris(methacryloxyethyl) isocyanurate; polyacrylate and/or polymethacrylate of alkylmodified dipentaerythritol; polyacrylate and/or polymethacrylate of caprolactone-modified dipentaerythritol; ethoxylated bisphenol A diacrylate and/or ethoxylated bisphenol A dimethacrylate; dihydrocyclopentadiethyl acrylate and/or dihydrocyclopentadiethyl methacrylate, as well as polyester acrylate and/or polyester methacrylate, dimethylol-tricyclodecane diacrylate, poly(meth)acrylate of ditrimethylolpropane, polyurethane having two or more (meth)acryloyl groups in one molecule, polyester having two or more (meth)acryloyl groups in one molecule, phenoxyethyl acrylate, isobornyl acrylate, phenoxydiethylene glycol (meth)acrylate, 4-tert-butylcyclohexyl acrylate, and epoxy resin half acrylate.
As the (meth)acrylate compound, any one kind of the above-described (meth)acrylate compounds may be used, or two or more kinds thereof may be used in combination.
Examples of commercial products of the (meth)acrylate compound include, but are not limited to, polyester acrylate manufactured by Daicel-Allnex Ltd. (product name: EBECRYL 810), ditrimethylolpropane tetraacrylate manufactured by Daicel-Allnex Ltd. (product name: EBECRYL 140), polyester acrylate manufactured by Toagosei Co., Ltd. (product name: M7100), dimethylol-tricyclodecane diacrylate manufactured by Kyoeisha Chemical Co., Ltd. (product name: LIGHT ACRYLATE DCP-A), and neopentyl glycol-modified trimethylolpropane diacrylate manufactured by Nippon Kayaku Co., Ltd. (product name: KAYARAD R-604).

As the cyanoacrylate compound, a known compound represented by H₂C=C(CN)-COOR can be used. In the formula, R is an ester residue such as an alkyl group, a cycloalkyl group, an alkenyl group, a cycloalkenyl group, an alkynyl group, or an aryl group. The number of carbon atoms of the ester residue is not particularly limited, but those usually having 1 to 8 carbons can be used. In addition, an ester residue consisting of a substituted hydrocarbon group such as an alkoxyalkyl group or a trialkylsilylalkyl group can also be used.

Examples of the cyanoacrylate compound include, but are not limited to, alkyl and cycloalkyl cyanoacrylates such as methyl cyanoacrylate, ethyl cyanoacrylate, propyl cyanoacrylate, butyl cyanoacrylate, and cyclohexyl cyanoacrylate; alkenyl and cycloalkenyl cyanoacrylates such as allyl cyanoacrylate, methallyl cyanoacrylate, and cyclohexenyl cyanoacrylate; alkynyl cyanoacrylates such as propargyl cyanoacrylate; aryl cyanoacrylates such as phenyl cyanoacrylate and toluyl cyanoacrylate; heteroatomcontaining methoxyethyl cyanoacrylate, ethoxyethyl cyanoacrylate, and furfuryl cyanoacrylate; and silicon-containing trimethylsilylmethyl cyanoacrylate, trimethylsilylethyl cyanoacrylate, trimethylsilylpropyl cyanoacrylate, dimethylvinylsilylmethyl cyanoacrylate, and the like.

These may be used alone, or two or more kinds thereof may be used in combination.

Examples of the maleimide compound include, but are not limited to, N,N'-(4,4'-diphenylmethane)bismaleimide, bisphenol A diphenyl ether bismaleimide, 3,3'-dimethyl-5,5'-diethyl-4,4'-diphenylmethanebismaleimide, 4-methyl-1,3-phenylenebismaleimide, 1,6'-bismaleimide-(2,2,4-trimethyl)hexane, bis-(3-ethyl-5-methyl-4-maleimidophenyl)methane, m-phenylenebismaleimide (N,N'-1,3-phenylenebismaleimide), 1,6-bismaleimidehexane, 1,2-bismaleimidoethane (N,N'-ethylenedimaleimide), N,N'-(1,2-phenylene)bismaleimide, N,N'-1,4-phenylenedimaleimide, N,N'-(sulfonyldi-p-phenylene)dimaleimide, and N,N'-[3,3'-(1,3-phenylenedioxy)diphenyl]bismaleimide. These may be used alone, or two or more kinds thereof may be used in combination.

When a low room-temperature elastic modulus is required for a cured product of the resin composition, the maleimide compound is preferably a maleimide compound having a hydrocarbon group derived from a dimer acid. Such a maleimide compound is described in, for example, Japanese Patent Application Laid-Open No. 2015-193725. Examples of commercial products of the maleimide compound having a hydrocarbon group derived from a dimer acid include, but are not limited to, product name "BMI-689", product name "BMI-1500", and product name "BMI-1700", which are liquid at 25°C, or product name "BMI-3000", which is solid at 25°C (all manufactured by Designer Molecules, Inc.). These may be used alone, or two or more kinds thereof may be used in combination.

Methylene malonates are malonates having at least one methylene group in a molecule, and examples thereof include monofunctional methylene malonates having one methylene group and polyfunctional methylene malonates having two or more methylene groups. The methylene malonates preferably have a molecular weight of 220 or more. There is no particular restriction on the kinds of usable methylene malonates, and various disclosed methylene malonates can be used in addition to the compounds described in WO 2018/212330 A1 and the like. The methylene malonates may be used alone, or two or more kinds thereof may be used in combination.

The thiol compound in the mixture of the compound having an unsaturated double bond and the thiol compound is a compound containing at least one thiol group, and the thiol group can undergo a radical addition reaction (ene-thiol reaction) with the unsaturated double bond of the compound having an unsaturated double bond. The thiol compounds are roughly classified into thiol compounds having a hydrolyzable partial structure such as an ester bond in the molecule (that is, hydrolyzable) and thiol compounds not having such a partial structure (that is, non-hydrolyzable).

Examples of the hydrolyzable thiol compound include, but are not limited to, trimethylolpropane tris(3-mercaptopropionate) (for example, manufactured by SC Organic Chemical Co., Ltd.: TMMP), tris-[(3-mercaptopropionyloxy)-ethyl]-isocyanurate (for example, manufactured by SC Organic Chemical Co., Ltd.: TEMPIC), pentaerythritol tetrakis(3-mercaptopropionate) (for example, manufactured by SC Organic Chemical Co., Ltd.: PEMP), tetraethylene glycol bis(3-mercaptopropionate) (for example, manufactured by SC Organic Chemical Co., Ltd.: EGMP-4), dipentaerythritol hexakis(3-mercaptopropionate) (for example, manufactured by SC Organic Chemical Co., Ltd.: DPMP), pentaerythritol tetrakis(3-mercaptobutyrate) (for example, manufactured by Showa Denko K.K.: Karenz MT^{®} PE1), and 1,3,5-tris(3-mercaptobutyryloxyethyl)-1,3,5-triazine-2,4,6(1H,3H,5H)-trione (for example, manufactured by Showa Denko K.K.: Karenz MT^{®} NR1). These may be used alone, or two or more kinds thereof may be used in combination.

Examples of the non-hydrolyzable polyfunctional thiol compound include, but are not limited to, 1,3,4,6-tetrakis(2-mercaptoethyl)glycoluril (for example, manufactured by Shikoku Chemicals Corporation: TS-G), 1,3,4,6-tetrakis(3-mercaptopropyl)glycoluril (for example, manufactured by Shikoku Chemicals Corporation: C3 TS-G), 1,3,4,6-tetrakis(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a,6a-dimethylglycoluril, 1,3,4,6-tetrakis(2-mercaptoethyl)-3a,6a-dimethylglycoluril, 1,3,4,6-tetrakis(3-mercaptopropyl)-3a,6a-dimethylglycoluril, 1,3,4,6-tetrakis(mercaptomethyl)-3a,6a-diphenylglycoluril, 1,3,4,6-tetrakis(2-mercaptoethyl)-3a,6a-diphenylglycoluril, 1,3,4,6-tetrakis(3-mercaptopropyl)-3a,6a-diphenylglycoluril, tris(3-mercaptopropyl) isocyanurate, 1,3,5-tris[3-(2-mercaptoethylsulfanyl)propyl] isocyanurate, 1,3,5-tris[2-(3-mercaptopropoxy)ethyl] isocyanurate, pentaerythritol tripropanethiol (for example, manufactured by SC Organic Chemical Co., Ltd.: PEPT), 3-[2,3-bis(3-sulfanylpropoxy)propoxy]propane-1-thiol, 3-[2,2-bis[(3-mercaptopropoxy)methyl]butoxy]-1-propanethiol, pentaerythritol tetrapropanethiol, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, 3-[2-(1,3-dithietanyl)]methyl-7,9,13,15-tetrakis(mercaptomethylthio)-1,17-dimercapto-2,4,6,10,12,16-hexathiaheptadecane, 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, and 4-{1-[2-(1,3-dithietanyl)]-3-mercapto-2-thiapropylthio}-5-[1,2-bis(mercaptomethylthio)-4-mercapto-3-thiabutylthio]-1,3-dithiolane. These may be used alone, or two or more kinds thereof may be used in combination.

In one aspect, the content of the (A) radically polymerizable compound in the resin composition is preferably 1 to 99 parts by mass, more preferably 5 to 50 parts by mass, and even more preferably 7 to 30 parts by mass, based on 100 parts by mass of the total amount of the resin composition. In another aspect, the content of the (A) radically polymerizable compound in the resin composition is preferably 30 to 99 parts by mass, more preferably 50 to 99 parts by mass, and even more preferably 60 to 99 parts by mass, based on 100 parts by mass of the total amount of the resin composition. In addition, the content of the (A) radically polymerizable compound in the resin composition is preferably 40 to 99 parts by mass, more preferably 45 to 99.5 parts by mass, and even more preferably 50 to 98 parts by mass, based on 100 parts by mass of the total amount of all organic substances (provided that low-stress imparting materials such as organic fillers and elastomers are excluded) contained in the resin composition.

### (B) Thermally latent polymerization initiator

The resin composition of the present aspect comprises (B) the thermally latent polymerization initiator of the above-described embodiment (hereinafter, also referred to as "component (B)"). Thereby, a resin composition that is excellent in storage stability and can be thermoset at a low temperature can be provided. As the thermally latent polymerization initiator, any one kind may be used, or two or more kinds may be used in combination.

The content of the (B) thermally latent polymerization initiator in the resin composition of the present aspect is preferably 0.5 to 60 parts by mass, more preferably 1 to 50 parts by mass, and even more preferably 1 to 40 parts by mass, based on 100 parts by mass of the resin composition.

### (C) Thermal radical initiator desorption accelerator

The resin composition of the present aspect can further comprise (C) a thermal radical initiator desorption accelerator (hereinafter, also referred to as "component (C)"). In the present specification, the (C) thermal radical initiator desorption accelerator (hereinafter, also simply referred to as "desorption accelerator") is a substance capable of accelerating desorption of a thermal radical initiator from an inorganic ion exchanger by replacing the thermal radical initiator supported on the inorganic ion exchanger in the thermally latent polymerization initiator. The (C) desorption accelerator can be a Lewis basic substance or a Lewis acidic substance. For example, when the inorganic ion exchanger in the thermally latent polymerization initiator is an inorganic cation exchanger, a Lewis basic substance can be used as the (C) desorption accelerator. For example, when the inorganic ion exchanger in the thermally latent polymerization initiator is an inorganic anion exchanger, a Lewis acidic substance can be used as the (C) desorption accelerator. In one embodiment of the present aspect, the (C) desorption accelerator is a Lewis basic substance. Examples of the Lewis basic substance include, but are not limited to, water, amines, and imidazoles. In one embodiment of the present aspect, the (C) desorption accelerator is a Lewis acidic substance. Examples of the Lewis acidic substance include, but are not limited to, water and fatty acids.

The content of the (C) desorption accelerator in the resin composition of the present aspect is preferably 0.001 to 60 parts by mass, more preferably 0.01 to 50 parts by mass, and even more preferably 0.1 to 40 parts by mass, based on 100 parts by mass of the resin composition.

Alternatively, the content of the (C) desorption accelerator in the resin composition of the present aspect is preferably 0.01 to 100 parts by mass, more preferably 0.1 to 90 parts by mass, and even more preferably 1 to 80 parts by mass, based on 100 parts by mass of the (B) thermally latent polymerization initiator.

If desired, the resin composition of the present aspect may contain optional components other than the above components (A) to (C), for example, those described below, as necessary.

### - Polymerization inhibitor

The resin composition of the present aspect may contain a polymerization inhibitor. The polymerization inhibitor is a compound having a radical scavenging ability. By containing the polymerization inhibitor, progress of an unintended radical polymerization reaction is suppressed, and stability during storage of the resin composition can be further enhanced.

As the polymerization inhibitor, known polymerization inhibitors can be used, and examples thereof include, but are not limited to, N-nitroso-N-phenylhydroxylamine aluminum, triphenylphosphine, p-methoxyphenol, hydroquinone, p-benzoquinone, and the like. In addition, known polymerization inhibitors disclosed in Japanese Patent Application Laid-Open No. 2010-117545, Japanese Patent Application Laid-Open No. 2008-184514, and the like can also be used. As the polymerization inhibitor, any one kind may be used, or two or more kinds may be used in combination.

When the resin composition contains the polymerization inhibitor, the content of the polymerization inhibitor is preferably 0.1 to 5.0 parts by mass, more preferably 0.2 to 4.0 parts by mass, and even more preferably 0.3 to 3.0 parts by mass, based on 100 parts by mass of the (B) thermally latent polymerization initiator.

### - Filler

The resin composition of the present aspect may contain a filler within a range that does not impair the purpose of the present aspect. By containing the filler in the resin composition, the linear expansion coefficient of a cured product obtained by curing the resin composition can be lowered, and thermal cycle resistance is improved. In addition, if it is a low-elasticity modulus filler, stress generated in the cured product can be relaxed, and long-term reliability is improved. Fillers are roughly classified into inorganic fillers and organic fillers.

The inorganic filler consists of a granular body formed of an inorganic material, and is not particularly limited as long as it has an effect of lowering the linear expansion coefficient by addition. As the inorganic material, silica, talc, zeolite, alumina, aluminum nitride, calcium carbonate, aluminum silicate, magnesium silicate, magnesium carbonate, barium sulfate, barium carbonate, lime sulfate, aluminum hydroxide, calcium silicate, potassium titanate, titanium oxide, zinc oxide, silicon carbide, silicon silicon nitride, boron nitride, and the like can be used. As the inorganic filler, any one kind may be used, or two or more kinds may be used in combination. As the inorganic filler, it is preferable to use a silica filler since the filling amount can be increased. The silica is preferably amorphous silica.

The inorganic filler preferably has a surface treated with a coupling agent such as a silane coupling agent. Thereby, the thixotropic index (TI: Thixotropic Index) of the resin composition can be brought into an appropriate range.

Moreover, a conductive filler can also be used as the inorganic filler. The conductive filler may be one obtained by molding a conductive substance into a particulate shape, or one obtained by coating a core (core particle) with a conductive substance (coated powder). The core contained in the conductive filler may consist of a non-conductive substance as long as a part thereof is coated with the conductive substance. The conductive substance in the conductive filler is not particularly limited as long as it imparts thermal conductivity and/or electrical conductivity to the resin composition, and examples thereof include, but are not limited to, gold, silver, nickel, copper, palladium, platinum, bismuth, tin, and alloys thereof (particularly, a bismuth-tin alloy, solder, and the like), aluminum, indium tin oxide, silver-coated copper, silver-coated aluminum, metal-coated glass spheres, silver-coated fibers, silver-coated resins, antimony-doped tin, tin oxide, carbon fibers, graphite, carbon black, and mixtures thereof.

Examples of the organic filler include, but are not limited to, polytetrafluoroethylene (PTFE) fillers, silicone fillers, acrylic fillers, and styrene fillers. The organic filler may be surface-treated.

The shape of the filler is not particularly limited, and may be any of a spherical shape, a flake shape, a needle shape, an amorphous shape, and the like.

The average particle size of the filler is preferably 0.01 to 15 µm, and more preferably 0.01 to 10 µm. The maximum particle size of the filler is preferably 50 µm or less, and more preferably 30 µm or less.

In the present specification, the average particle size of the filler is a particle size at a cumulative value of 50% in a volume-based particle size distribution, measured by a laser diffraction/scattering method. The maximum particle size is a maximum particle size in a volume-based particle size distribution, measured by a laser diffraction/scattering method.

When containing the filler, the content of the filler is preferably 0.5 to 80% by mass, and more preferably 1 to 70% by mass, based on the total mass of the resin composition.

### - Other additives

If desired, the resin composition of the present aspect may further contain other additives, such as carbon black, titanium black, a thixotropic agent, a coupling agent, an ion-trapping agent, a leveling agent, an antioxidant, an antifoaming agent, a viscosity modifier, a flame retardant, a coloring agent, and a plasticizer, within a range that does not impair the purpose of the present aspect. The kind and addition amount of each additive are as usual.

The viscosity of the resin composition of the present aspect is preferably 0.1 to 100 Pa·s. The viscosity can be appropriately adjusted depending on the application and applied part of the resin composition. In the present specification, unless otherwise specified, the viscosity is represented by a value measured according to Japanese Industrial Standard JIS K6833. Specifically, it can be determined by measuring at a rotation speed of 10 rpm using an E-type viscometer. There is no particular restriction on the equipment, rotor, or measurement range to be used.

The method for producing the resin composition of the present aspect is not particularly limited. For example, the resin composition of the present aspect can be obtained by introducing the component (A), the component (B), and, if necessary, the component (C) and other optional components into an appropriate mixer simultaneously or separately, and stirring and mixing them to obtain a uniform composition. The mixer is not particularly limited, and a Raikai mixer, a Henschel mixer, a three-roll mill, a ball mill, a planetary mixer, a bead mill, and the like, equipped with a stirring device and a heating device, can be used. In addition, these devices may be used in an appropriate combination.

The resin composition thus obtained is thermosetting, and can be cured at a low temperature of, for example, 40 to 120°C, preferably 50 to 100°C, more preferably 60 to 90°C, and even more preferably 60 to 80°C. Under a temperature condition of 80°C, it can be cured within, for example, 30 hours, can be cured within, for example, 20 hours, is preferably cured within 4 hours, more preferably cured within 3 hours, and even more preferably cured within 1 hour. When the resin composition of the present aspect is used for producing a semiconductor module including a component that deteriorates under a high temperature condition, it is preferable to thermoset the composition at a temperature of 50 to 100°C for 15 minutes to 4 hours, and preferably for 30 minutes to 2 hours.

The resin composition of the present aspect can be used, for example, as an adhesive or a sealing material for fixing, bonding, or protecting components constituting a semiconductor device or an electronic component, or as a raw material thereof.

The method for applying the resin composition of the present aspect is not particularly limited, and the resin composition can be supplied to a desired part such as a base material by, for example, a known printing method, dispensing method, or coating method. Examples of the printing method include, but are not limited to, inkjet printing, screen printing, planographic printing, carton printing, metal printing, offset printing, gravure printing, flexographic printing, and the like. Examples of the dispensing method include, but are not limited to, a method using a jet dispenser, an air dispenser, or the like. Examples of the coating method include, but are not limited to, dip coating, spray coating, bar coater coating, gravure coating, reverse gravure coating, spin coater coating, and the like.

### [Adhesive or sealing material]

Another aspect of the present invention is an adhesive or a sealing material comprising the resin composition of the above-described aspect. This adhesive or sealing material enables good fixing, bonding, or protection for engineering plastics (for example, LCP (liquid crystal polymer), polyamide, polycarbonate, and the like), ceramics, and metals (for example, copper, nickel, and the like), and can be used for fixing, bonding, or protecting components constituting a semiconductor device or an electronic component. Examples of the semiconductor device or the electronic component include, but are not limited to, an HDD, a semiconductor element, a sensor module such as an image sensor module, other semiconductor modules, an integrated circuit, and the like.

Since the adhesive or the sealing material of the present aspect can be cured under a low temperature condition, it has high productivity and is suitable for use, for example, during production of a semiconductor device or an electronic component.

### [Film]

Another aspect of the present invention is a film comprising the resin composition of the above-described aspect. The film of the present aspect can be used for electronic components, and is suitable, for example, as a coverlay film for protecting a wiring pattern, an interlayer adhesive film for a multilayer wiring board, or a prepreg.

The film of the present aspect can be obtained from the resin composition of the above-described aspect by a known method. For example, the film can be provided as a film with a support, or a film peeled from a support, by diluting the resin composition of the above-described aspect with a solvent to form a varnish, applying this to at least one surface of a support, and drying it.

The prepreg can be produced by a known method, such as a hot melt method and a solvent method. When using the hot melt method, the prepreg can be produced by once coating the resin composition of the above-described aspect on a release paper having good releasability, without dissolving the resin composition in an organic solvent, and laminating it on a sheet-like fiber base material, or by directly coating it with a die coater, or the like. Moreover, when using the solvent method, first, the prepreg can be produced by immersing a sheet-like fiber base material in a resin composition varnish obtained by dissolving the resin composition of the above-described aspect in an organic solvent to impregnate the sheet-like fiber base material with the resin composition varnish, and thereafter drying the sheet-like fiber base material.

### [Cured product of resin composition]

Another aspect of the present invention is a cured product obtained by curing the resin composition of the above-described aspect. Such a cured product can be produced by heating the resin composition of the above-described aspect. A method for producing a cured product including heating the resin composition of the above-described aspect is also an aspect of the present invention. The heating temperature may be a low temperature of 40 to 120°C, preferably 50 to 100°C, more preferably 60 to 90°C, and even more preferably 60 to 80°C. Under a temperature condition of 80°C, the heating time is, for example, within 30 hours, for example, within 20 hours, preferably 4 hours (preferably within 4 hours), more preferably within 3 hours, and even more preferably within 1 hour. In one embodiment, the heating conditions may be a heating temperature of 50 to 100°C and a heating time of 15 minutes to 4 hours, and preferably 30 minutes to 2 hours.

### [Semiconductor device, electronic component]

Since a semiconductor device or an electronic component of an aspect of the present invention comprises the cured product of the above-described aspect, these semiconductor devices or electronic components have high reliability. Here, the semiconductor device refers to all devices capable of functioning by utilizing semiconductor characteristics, and includes electronic components, semiconductor circuits, modules incorporating them, electronic equipment, and the like. Examples of the semiconductor device or the electronic component include, but are not limited to, an HDD, a semiconductor element, a sensor module such as an image sensor module, other semiconductor modules, an integrated circuit, and the like.

### Examples

Hereinafter, the present invention will be described in more detail with reference to Production Examples, Examples, and Comparative Examples, but the present invention is not limited to these Production Examples and Examples. In the following Production Examples and Examples, "parts" and "%" represent "parts by mass" and "% by mass", respectively, unless otherwise specified.

### Experimental Example 1: Production of thermally latent polymerization initiator

### [Production Example 1]

34.6 g of phosphoric acid (FUJIFILM Wako Pure Chemical Corporation) was diluted with purified water to make 100 mL. 10.1 g of zirconium chloride oxide octahydrate (FUJIFILM Wako Pure Chemical Corporation) was added thereto, and reacted under reflux conditions for 24 hours. The obtained product was washed with purified water three times at 9500 rpm using a centrifuge to obtain θ-ZrP.

6.09 g (dry residue: 39.9%) of the synthesized θ-ZrP was centrifuged with ethanol three times at 9500 rpm using a centrifuge to replace the medium with ethanol. Thereafter, 32 mL of ethanol and 4.04 g of 2,2'-azobis[2-(2-imidazolin-2-yl)propane] (product name: VA-061, FUJIFILM Wako Pure Chemical Corporation) were added, and reacted at room temperature for 1 day. The product was washed with ethanol eight times at 9500 rpm using a centrifuge, and after confirming that no VA-061 remained in the supernatant, a thermally latent polymerization initiator 1 (ZrP-VA-061) was obtained. As a result of elemental analysis, C: 8.87, H: 2.13, and N: 4.41 were obtained, and when estimating the composition, it was Zr(HPO₄)₂ 0.18C₁₂H₂₂N₆ 0.63H₂O. From the amount of N, 0.53 mmol/g (13.1 wt%) of the thermal radical initiator (VA-061) was incorporated.

### [Production Example 2]

Zirconium propionate (8.38 g, 38.1 mmol) was dissolved in ethanol (100 mL), and phosphoric acid (12.0 mL) was added little by little with vigorous stirring. The obtained transparent gel was centrifuged three times with ethanol (4000 rpm, 3 min) to obtain synthesized nanoparticulate zirconium phosphate.

82.0 g of the synthesized nanoparticulate zirconium phosphate (hereinafter also referred to as "NanoZrP") (dry weight: 10.05%) was placed in an empty egg-plant shaped flask, 6.65 g of 2,2'-azobis[2-(2-imidazolin-2-yl)propane] (product name: VA-061, FUJIFILM Wako Pure Chemical Corporation) dissolved in 50 mL of ethanol was added thereto, and the mixture was stirred at room temperature for 1 hour. Thereafter, the product was centrifuged three times with ethanol (4000 rpm, 3 min., 0°C) to obtain a thermally latent polymerization initiator 2 (NanoZrP-VA-061). As a result of elemental analysis, C: 19.75, H: 3.82, and N: 10.35 were obtained, and when estimating the composition, it was Zr(HPO₄)₂ 0.55C₁₂H₂₂N₆ 1.4H₂O. From the amount of N, 1.23 mmol/g (30.8 wt%) of the thermal radical initiator (VA-061) was incorporated.

### [Production Example 3]

Into an empty egg-plant shaped flask, 2.00 g of powdered hydrotalcite (product name: DHT-6, Kyowa Chemical Industry Co., Ltd.), 1.17 g of 4,4'-azobis(4-cyanovaleric acid) (product name: V-501, FUJIFILM Wako Pure Chemical Corporation), and 32 mL of ethanol were weighed out, and the mixture was stirred for 24 hours. Thereafter, the product was washed with methanol three times at 9500 rpm for 5 minutes using a centrifuge to obtain a thermally latent polymerization initiator 3 (hydrotalcite-V-501). As a result of elemental analysis, C: 14.35, H: 4.73, and N: 2.82 were obtained. From the amount of N, 0.50 mmol/g (14.1 wt%) of the thermal radical initiator (V-501) was incorporated.

### Experimental Example 2: Production and evaluation of resin composition

### [Production of resin composition]

The resin compositions of Examples and Comparative Examples were prepared by mixing a predetermined amount of each component using a three-roll mill according to the formulations shown in Table 1 and Table 2. In Table 1 and Table 2, the amount of each component is represented by parts by mass (unit: mg). The components used in Examples and Comparative Examples are as follows.

### - (A) Radically polymerizable compound

(A-1): 2-Hydroxyethyl methacrylate (Tokyo Chemical Industry Co., Ltd.)
(A-2): Dimethylol-tricyclodecane diacrylate (product name: LIGHT ACRYLATE DCP-A, Kyoeisha Chemical Co., Ltd.)

### - (B) Thermally latent polymerization initiator

(B-1): Thermally latent polymerization initiator 1 of Production Example 1
(B-2): Thermally latent polymerization initiator 2 of Production Example 2
(B-3): Thermally latent polymerization initiator 3 of Production Example 3

### - (B') Radical polymerization initiator

(B'-1): 2,2'-Azobis[2-(2-imidazolin-2-yl)propane] (product name: VA-061, FUJIFILM Wako Pure Chemical Corporation)

### - (C) Desorption accelerator

(C-1): Water
(C-2): Propylamine
(C-3): Butylamine

In Examples and Comparative Examples, the properties of the resin compositions were measured as follows.

### < Curability and storage stability >

An oil bath was set up on a magnetic stirrer, and the temperatures were respectively set to the temperatures described in Table 1 and Table 2. Immediately after each resin composition of Examples and Comparative Examples was prepared, it was added to a 2 mL screw tube (glass bottle) containing a stirrer bar (Φ2 x 8 mm), and the tube was capped. The prepared screw tube was placed in the oil bath, and the stirrer bar was rotated at a visually observable speed.

In Table 1, the time required for the stirrer bar to stop moving was defined as a curing time, and curability was evaluated. In addition, regarding storage stability, it was confirmed visually by the stirrer bar rotating in the same manner as the initial state.

In Table 2, a case of being cured under the curing conditions shown in Table 2 was evaluated as "⊚", and a case of being uncured was evaluated as "x".

### [Table 1]

**Table 1**

| | | Example 1 | Com. Ex. 1 |
|---|---|---|---|
| (A) Radically polymerizable compound | (A - 1) | 195 | 195 |
| | (A - 2) | | |
| (B) Thermally latent polymerization initiator | (B - 1) | 30 | |
| | (B - 2) | | |
| | (B - 3) | | |
| (B') Radical polymerization initiator | (B' - 1) | | 3.9 |
| Storage stability (40°C) | | Remained liquid after 96 h | Cured after 45 h |
| Curability (80°C) | | Cured after 26 h | - |

### [Table 2]

**Table 2**

| | | Ex.2 | Ex.3 | Com.Ex.2 | Com.Ex.3 | Ex.4 | Ex.5 | Ex.6 | Ex.7 | Ex.8 |
|---|---|---|---|---|---|---|---|---|---|---|
| (A) Radically polymerizable compound | (A-1) | 130 | 130 | 130 | 130 | 130 | 130 | 130 | | |
| | (A-2) | | | | | | | | 100 | 100 |
| (B) Thermally latent polymerization initiator | (B-1) | 20 | 20 | | | 20 | | | 50 | |
| | (B-2) | | | | | | 20 | | | 10 |
| | (B-3) | | | | | | | 20 | | |
| (B') Radical polymerization initiator | (B'-1) | | | | | | | | | |
| (C) Desorption accelerator | (C-1) | 14 | | 15 | | | | | | |
| | (C-2) | | 10 | | 10 | | | | | |
| | (C-3) | | | | | 100 | | 10 | | |
| | (C-4) | | | | | | 148 | | | 74 |
| Curing condition | | 80°C30min | 80°C30min | 80°C24h | 80°C26h | 80°C18h | 60°C36h | 60°C16h | 80°C90min | 80°C90min |
| Curability | | ⊚ | ⊚ | × | × | ⊚ | ⊚ | ⊚ | ⊚ | ⊚ |

All references, patent applications, and technical standards described herein are incorporated herein by reference to the same extent as if the individual references, patent applications, and technical standards were specifically and individually noted as being incorporated by reference.

## Claims

1. A thermally latent polymerization initiator in which a thermal radical initiator is supported on inorganic ion exchanger particles.

2. The thermally latent polymerization initiator according to claim 1, wherein the thermal radical initiator is an azo-based radical initiator.

3. The thermally latent polymerization initiator according to claim 1 or 2, wherein the inorganic ion exchanger is an inorganic cation exchanger.

4. The thermally latent polymerization initiator according to claim 3, wherein the inorganic cation exchanger is a phosphoric acid-based inorganic cation exchanger.

5. The thermally latent polymerization initiator according to claim 4, wherein the phosphoric acid-based inorganic cation exchanger is zirconium phosphate.

6. A resin composition comprising (A) a radically polymerizable compound, and (B) the thermally latent polymerization initiator according to any one of claims 1 to 5.

7. The resin composition according to claim 6, further comprising (C) a thermal radical initiator desorption accelerator.

8. The resin composition according to claim 7, wherein the (C) thermal radical initiator desorption accelerator is a Lewis basic substance.

9. An adhesive or a sealing material comprising the resin composition according to any one of claims 6 to 8.

10. A film comprising the resin composition according to any one of claims 6 to 8.

11. A cured product in which the resin composition according to any one of claims 6 to 8 has been cured.

12. A method for producing a cured product, comprising heating the resin composition according to any one of claims 6 to 8.

13. A semiconductor device or an electronic component comprising the cured product according to claim 11.

14. A method for producing a thermally latent polymerization initiator, comprising mixing a thermal radical initiator and an inorganic ion exchanger in the presence of a medium at a temperature lower than a 10-hour half-life temperature of the thermal radical initiator.

15. The method for producing a thermally latent polymerization initiator according to claim 14, wherein the thermal radical initiator is an azo-based radical initiator.
